## Europäisches Patentamt
## European Patent Office
## Office européen des brevets

(11) Veröffentlichungsnummer: **0 216 321**
**B1**

(12) # EUROPÄISCHE PATENTSCHRIFT

(45) Veröffentlichungstag der Patentschrift:
30.08.89

(51) Int. Cl.⁴: **B62D 49/02, A01B 63/111**

(21) Anmeldenummer: **86112930.2**

(22) Anmeldetag: **18.09.86**

(54) Betätigungseinrichtung für einen Kraftheber.

(30) Priorität: 26.09.85 DE 3534316

(43) Veröffentlichungstag der Anmeldung:
01.04.87 Patentblatt 87/14

(45) Bekanntmachung des Hinweises auf die Patenterteilung:
30.08.89 Patentblatt 89/35

(84) Benannte Vertragsstaaten:
AT BE CH DE FR GB IT LI

(56) Entgegenhaltungen:
EP-A- 0 128 715
DE-A- 2 055 403
DE-B- 2 501 753
FR-A- 2 303 460
US-A- 3 455 397

(73) Patentinhaber: **DEERE & COMPANY, 1 John Deere Road, Moline Illinois 61265(US)**

(72) Erfinder: **Becker, Manfred, Dipl.-Ing., Hanns-Fay-Strasse 3, D-6710 Frankenthal(DE)**

(74) Vertreter: **Feidmann, Bernhard et al, DEERE & COMPANY European Office, Patent Department Steubenstrasse 36-42 Postfach 503, D-6800 Mannheim 1(DE)**

ACTORUM AG

**Beschreibung**

Die Erfindung betrifft eine Betätigungseinrichtung für einen Kraftheber mit mindestens einem Ventil, das über Stellglieder von einer mechanischen Hauptsteuereinheit aus, bzw. über einen Nebenschalter und einen Motor von einer elektrischen Nebensteuereinheit aus zum Einleiten einer Hub- oder Senkbewegung betätigt wird.

Eine bekannte Betätigungseinrichtung für einen Kraftheber (DE-B 2 501 753) weist eine mechanische Hauptsteuereinheit in der Form eines auf Ventile über Stellglieder wirkenden Hebels auf, wobei die Stellglieder entweder manuell und direkt oder über einen Motor verstellt werden können. Der Motor kann von einem Nebenschalter aus, der sich auf einem Bedienungspult befindet, gesteuert werden, und eine gleichzeitig eingerückte Kupplung stellt eine Verbindung zwischen dem Motor und den Verbindungsgliedern her. Zwischen dem Motor und der Kupplung befindet sich ein Untersetzungsgetriebe, mit der Folge, daß die Kupplung jeweils wieder ausser Eingriff gebracht werden muß, wenn der Hebel direkt und manuell betätigt werden soll, da das Untersetzungsgetriebe einen Antrieb zu dem Motor nicht zuläßt.

Dieser Betätigungseinrichtung haftet daher der Nachteil an, daß der Kraftheber je nach dem Standort der Bedienungsperson über zwei völlig unterschiedliche Mechanismen, nämlich einen mechanischen und einen elektrischen, gesteuert werden muß, die in ihrem Ansprechverhalten, in ihrem Kraftaufwand und in ihrem Bedienungskomfort völlig unterschiedlich sind. Außerdem muß stets gewährleistet sein, daß die Kupplung offen ist, wenn der Hebel direkt betätigt werden soll.

Die der Erfindung zugrunde liegende Aufgabe wird darin gesehen, eine Möglichkeit zu schaffen, durch die der Kraftheber von mehreren Stellen aus bedient werden kann, wobei zu dessen Bedienung jedoch nur ein einheitliches System verwendet werden soll.

Diese Aufgabe ist dadurch gelöst worden, daß der Motor ständig mit den Stellgliedern verbunden ist und die Hauptsteuereinheit mit einem ebenfalls auf den Motor wirkenden Hauptschalter versehen ist.

Auf diese Weise erfolgt die Betätigung des Krafthebers stets über einen Elektrokreis, so daß keine Unterschiede in seiner Bedienung entstehen können. Die Hauptsteuereinheit, die in der bekannten Betätigungseinrichtung ein einfacher Hebel ist, kann dennoch beibehalten werden; jedoch dient sie dann nur noch als Anzeige oder als Notsteuereinheit, wenn der Elektrokreis nicht funktionsfähig sein sollte.

Sofern man darauf verzichten will, die bisher mechanisch ausgebildete Hauptsteuereinrichtung für Notsituationen beizubehalten, kann man nach einem die Erfindung fortentwickelnden Merkmal vorsehen, daß auch die Hauptsteuereinrichtung rein elektrisch wirkt, wodurch eine Teileersparnis eintritt.

Die Vorkehrungen gemäß den Patentansprüchen 3 und 4 sind Sicherheitsmerkmale, die Verletzungen oder Schäden beim Bedienen des Krafthebers ausschließen sollen, wobei insbesondere deren Anwendung bei einem Kraftheber eines Ackerschleppers ein bislang nur umständlich gelöstes Problem beseitigt.

Das vorteilhafte Merkmal des Patentanspruches 5 sorgt für einen weiteren Fortfall von Teilen, da der Motor nicht mehr benötigt wird.

Die Anordnung des Hauptschalters in der Griffweite eines auf einem Fahrersitz sitzenden Fahrers und zusätzlich die Anordnung des oder mehrerer Nebenschalter außerhalb der Griffweite des auf dem Fahrersitz sitzenden Fahrers führt zu einer optimalen Bedienungsmöglichkeit des Krafthebers von mehreren Stellen des Ackerschleppers aus. So könnte gemäß diesem die Erfindung fortentwickelnden Merkmal ein Nebenschalter in der Nähe eines Anbaubereichs für mit den Lenkern zu verbindende Geräte angeordnet sein. Geeignet hierfür wäre der rückwärtige Bereich der linken und/oder der rechten rückwärtigen Radabdeckung. Wenn der Motor oder ein weiterer Motor auf einen Bedienungshebel oder die Stellglieder eines Zusatzsteuergerätes, z. B. für einen Frontkraftheber, wirkt, könnte der Nebenschalter oder ein weiterer Nebenschalter im frontseitigen Endbereich des Ackerschleppers angeordnet sein. Es wäre ferner möglich, den Nebenschalter auf einem an den Kraftheber anzuschließenden Gerät anzubringen, so daß dieses von einer sich darauf befindlichen Person unmittelbar in bezug auf seine Arbeitstiefe gesteuert werden kann.

Damit der Fahrer bzw. die den Kraftheber bedienende Person überblicken kann, in welcher Lage sich die mit dem Kraftheber verbundenen Lenker gerade befinden, ist es wertvoll, eine Anzeige anzubringen, die beispielsweise als ein Zeiger ausgebildet sein kann, der in einem Schlitz einer Kulisse geführt ist. Es wäre jedoch auch machbar, die Anzeige durch Leuchtzeichen oder dergleichen zu vollziehen. Ist als Anzeige ein über die Kulisse vorstehender Zeiger vorgesehen, dann ist auf einfache, jedoch sehr wirkungsvolle Weise eine zusätzliche Möglichkeit des Betätigens der Betätigungseinrichtung in einem Störungsfall der Stromversorgung möglich, wenn auf den Zeiger ein gewöhnlicher Bedienungshebel aufsetzbar ist bzw. durch diesen ersetzbar ist.

Durch das Parallelschalten des Haupt- und des Nebenschalters in bezug auf den Motor ist gewährleistet, daß die Bedienung von der einen Stelle aus nicht abhängig ist von der Stellung des Haupt- oder Nebenschalters an der anderen Stelle. Das Hintereinanderschalten des Sicherheitsschalters und des Nebenschalters führt jedoch zu der Sicherheit, daß der Kraftheber nicht von außerhalb des Fahrerstandes oder der Fahrerkabine bedient werden kann, wenn der Sicherheitsschalter nicht geschlossen ist, d. h. wenn als Regelart die Zugwiderstands- oder die Mischregelung gewählt ist.

Wenn die Haupt- und Nebenschalter aufgrund ihrer Ausbildung als Dreistellungsschalter, die stets im nicht betätigten Zustand in eine Unterbrechungsstellung zurückkehren, nur so lange eine Betätigung des Krafthebers bewirken, solange sie betätigt werden, ist sicher, daß eine ungewollte Betätigung des Krafthebers überhaupt oder über ein bestimmtes Maß hinaus nicht stattfindet. Die Ausbildung des Sicherheitsschalters als Zweistellungsschalter dagegen erfordert ständig eine Entscheidung, ob ein Stromdurchgang gewollt ist oder nicht.

Der Vorteil bei der Ausgestaltung der Betätigungseinrichtung nach Anspruch 13 liegt in der Geringfügigkeit der Änderung gegenüber der bekannten Betätigungseinrichtung, die es erlaubt, die herkömmliche Betätigungseinrichtung einfach mit einem Motor und einem Elektrokreis nachzurüsten.

Die Verwendung eines Zeitrelais im Nebenschalterkreis läßt stets nur eine begrenzte Hubbewegung von außerhalb des Fahrerstandes zu, so daß eine ungewollt große Hubbewegung unterbleibt und es beim Anhängen von Geräten an die Lenker nicht geschehen kann, daß ein Gerät umfällt, weil es nur von einem unteren Lenker auf einer Seite angehoben worden ist.

Ein mit einer sogenannten Monoflop-Charakteristik arbeitendes Zeitrelais erbringt den Vorteil, daß zum Geben von weiterer Energie an den Motor der Nebenschalter stets erneut niedergedrückt werden muß, so daß ein eigentlich ungewolltes Überfahren der angesteuerten Position des Krafthebers vermieden wird.

Hingegen wird bei einer astabilen Charakteristik dem Motor intervallmäßig stets neue Energie zugeführt, solange das Zeitrelais betätigt, der Nebenschalter also niedergedrückt bleibt. Auch bei einer derartigen Ausführung wird vermieden, daß eine Bedienungsperson eine angesteuerte Position des Krafthebers überfährt, da zwischen den jeweiligen Intervallen, in denen dem Motor Energie zugeführt wird, dem Motor keine Energie zugeführt wird, so daß der Bedienungsperson ausreichend Zeit bleibt zu entscheiden, ob der Kraftheber weiter betätigt werden soll oder nicht. Der Gewinn gegenüber dem Zeitrelais mit der Monoflop-Charakteristik ist in der einfacheren und bequemeren Steuerung des Krafthebers mittels des Nebenschalters zu sehen, da dieser nicht ständig betätigt zu werden braucht.

Das die Erfindung weiterentwickelnde Merkmal gemäß Anspruch 17 gewährleistet zum einen, daß es bei gleichzeitiger Betätigung mehrerer Nebenschalter nicht zu einem Kurzschluß kommen kann. Es ist diesbezüglich in einem solchen Fall möglich, entweder dem Motor bzw. den Ventilen gar keine Energie zuzuführen oder einen Nebenschalter gegenüber einem anderen Nebenschalter vorrangig zu gestalten, wie dies in hervorragender Weise für die Beziehung zwischen dem Haupt- und den Nebenschaltern gemäß Anspruch 18 vorgeschlagen wird. Das vorrangige Behandeln eines Haupt- oder eines Nebenschalters könnte etwa über Dioden oder Transistoren erreicht werden.

Eine noch feinfühlendere Verstellung des Krafthebers läßt sich erreichen, wenn vorgesehen ist, daß die Verstellgeschwindigkeit des Motors wahlweise mittels des Haupt- und/oder des Nebenschalters steuerbar ist. Auf diese Weise kann durch die Wahl einer hohen Ausgangsgeschwindigkeit des Motors eine Grobeinstellung und durch die Wahl einer geringen Ausgangsgeschwindigkeit eine Feineinstellung des Krafthebers bewirkt werden.

Überdies kann es von Nutzen sein, wenn auch der Hauptschalter über ein Zeitrelais mit astabiler oder Monoflop-Charakteristik auf den Motor bzw. die Ventile wirkt, da insbesondere beim Regeln der Arbeitstiefe eines von dem Kraftheber getragenen Gerätes mittels eines automatischen Regelvorganges oder per Hand ein zu übermäßiges Anheben oder Absenken des Gerätes vermieden wird, wodurch bisher gegebenenfalls notwendige Korrekturen entfallen.

In der Zeichnung ist ein nachfolgend näher beschriebenes Ausführungsbeispiel der Erfindung dargestellt. Es zeigt:

Fig. 1 eine perspektivische Darstellung einer erfindungsgemäßen Betätigungseinrichtung,
Fig. 2 eine Darstellung eines Schaltplanes eines Elektrokreises und
Fig. 3 eine von dem in Fig. 1 dargestellten Ausführungsbeispiel geringfügig abweichende Variante.

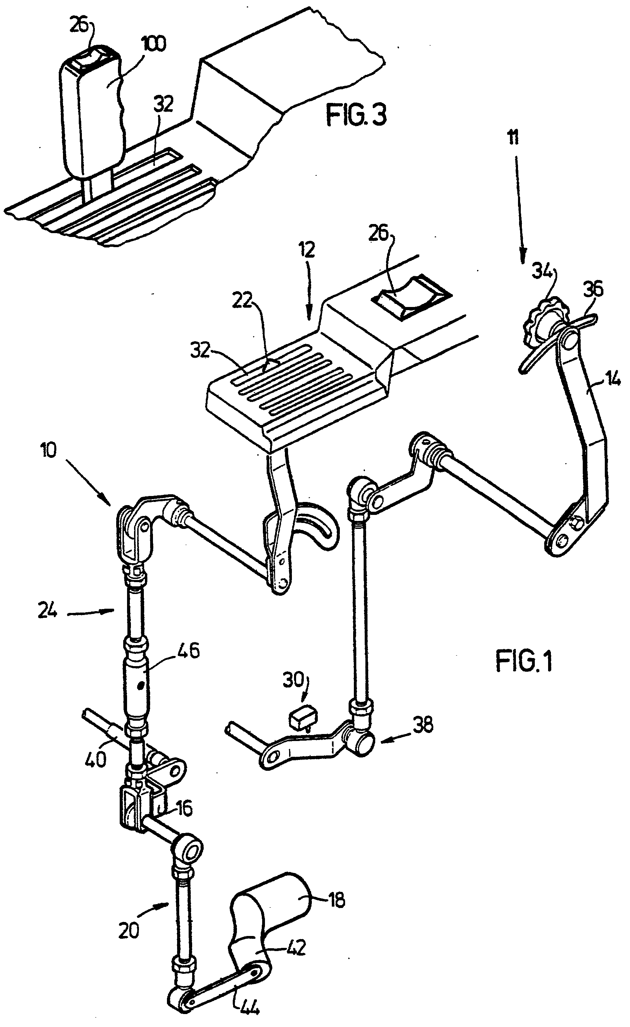

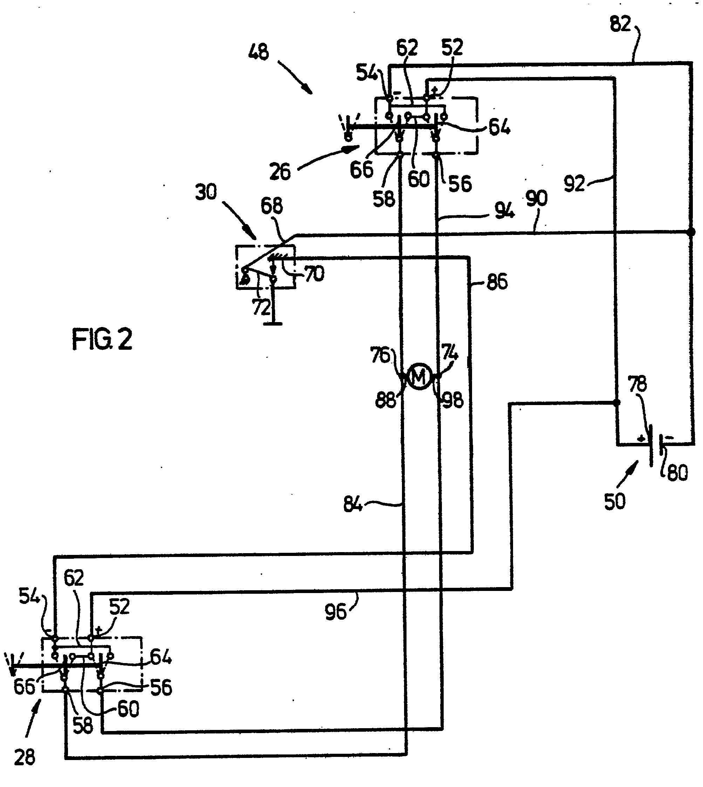

In Fig. 1 ist eine Betätigungseinrichtung mit einem Bedienungsgestänge 10 und einer Steuereinheit 11 für einen nicht gezeigten Kraftheber eines Ackerschleppers mit Lenkern zum Verbinden mit einem an den Ackerschlepper anzuhängenden Gerät gezeigt. Die Steuereinheit 11 enthält eine Kulisse 12 und einen Wählhebel 14 zum Wählen einer Regelart. Das Bedienungsgestänge 10 weist einen Hebel 16 zum Bedienen nicht gezeigter Hub- und Senkventile auf. Ferner sind ein Motor 18 in der Art eines Elektromotors mit einem Gestänge und eine Anzeige 22 in der Form eines Zeigers mit Stellgliedern 24 vorhanden. Weiterhin sind ein Hauptschalter 26, mindestens ein nur in Fig. 2 gezeigter Nebenschalter 28 und ein Sicherheitsschalter 30 vorgesehen, die auf die in Fig. 2 gezeigte Art miteinander und mit dem Motor 18 verbunden sind.

Die Kulisse 12 ist mit fünf Schlitzen 32 versehen, von denen einer die Anzeige 22 längsbeweglich aufnimmt. Die Anzeige 22 erstreckt sich durch den ihr zugeordneten Schlitz 32 und steht über die Oberfläche der Kulisse 12 über. Sie ist an ihrem oberen Endbereich etwas angespitzt und über ihre ganze Länge als Flachteil, beispielsweise aus Flachstahl, gebildet. Sie kann, wie dies jedoch nicht gezeigt ist, so weit über die Kulisse 12 überstehen, daß auf sie ein Bedienungshebel oder eine Griffhülse aufgesetzt werden kann, so daß die Anzeige 22 nicht nur der Veranschaulichung der Stellung des Hebels 16 dient, sondern über sie selbst eine Verstellung des Hebels 16 bewirkt werden kann. Dabei ist jedoch darauf zu achten, daß der Hebel 16 dann von dem Motor 18 getrennt ist, damit er nicht durch die Bewegung des Bedienungshebels beschädigt wird. In die Kulisse 12 ist ferner der Hauptschalter 26 eingesetzt, der wie eine Wippe wirkt und einerseits in eine Stellung "Senken" und andererseits in eine Stellung "Heben" niedergedrückt werden kann.

Der Wählhebel 14 ist mit einem Feststellknopf 34 versehen und in einer Führung 36 gehalten. Die Führung 36 ist derart ausgebildet, daß sie ein Verschwenken des Wählhebels 14 zwischen einer Endstellung für Lageregelung und einer Endstellung für Zugwiderstandsregelung zuläßt. Jedoch kann der Wählhebel 14 auch jede Stellung zwischen den beiden Endstellungen zum Erzielen einer Mischregelung einnehmen und überall mittels des Feststellknopfes 34 arretiert werden. Wie eine Zugwiderstands-, eine Misch- und eine Lageregelung erreicht werden, was sie bewirken und wie der Wählhebel 14 konkret ausgeführt ist, kann der bekannten Betätigungseinrichtung entnommen werden. Bemerkt sei hier lediglich, daß der Wählhebel 14 über einen Hebelmechanismus 38, der mit dem Sicherheitsschalter 30 zusammenwirkt, indirekt auf die vorgenannten Hub- und Senkventile wirkt.

Der Hebel 16 ist einenends auf eine Welle 40 starr aufgesetzt und anderenends schwenkbar mit dem Gestänge 20 wie auch mit den Stellgliedern 24 verbunden. Eine Schwenkbewegung des Hebels 16 bewirkt eine Drehbewegung der Welle 40, die sich durch einen nicht gezeigten Übertragungsmechanismus als Längsbewegung auf die Hub- und Senkventile auswirkt und somit zu einem Anheben oder Absenken von unteren Lenkern des Krafthebers führt. Das Gestänge 20 ist anderenends schwenkbar an den Motor 18 angeschlossen und überträgt so mit eine von diesem ausgehende Stellbewegung auf den Hebel 16 und über diesen letztes Endes auf die Hub- und Senkventile.

Der Motor 18 ist als Langsamläufer mit einem Getriebe 42 ausgebildet, dessen von einem Rotor erzeugte Drehbewegung in eine Schwenkbewegung umgewandelt wird, die mittels eines ausgangsseitig vorgesehenen Hebelarms 44 auf das Gestänge übertragen wird. Der Motor 18 ist also mehr oder weniger mit einem Scheibenwischermotor vergleichbar und wird ebenfalls auf die in Fig. 2 gezeigte Weise gesteuert.

Das Gestänge 20 kann einfach als Stange mit endseitig angeordneten, nicht näher gezeichneten Kugelkopflagern ausgebildet sein.

Die Stellglieder 24, auf deren Einzelteile nicht umfassend eingegangen wird, weisen eine Schraubspindel 46 zum Verändern ihrer wirksamen Länge auf, so daß ein Justieren des Verhältnisses zwischen dem Hebel 16 und der Anzeige 22 möglich ist. Die Stellglieder 24 sind den jeweiligen Anforderungen bezüglich der Kräfteübertragung und den Platzverhältnissen angepaßt und können gegebenenfalls auch anders, beispielsweise als Bowdenzug, aufgebaut sein. Ihre Aufgabe liegt bei dem Ausführungsbeispiel nach Fig. 1 hauptsächlich in der Übertragung der Stellung des Hebels 16 auf die Anzeige 22.

Zum Aufbau eines der Betätigungseinrichtung zugehörigen Elektrokreises 48 wird im folgenden auf Fig. 2 verwiesen.

Der Elektrokreis 48 enthält außer diversen Leitungen, die nachfolgend einzeln aufgeführt sind, eine Stromquelle in der Form einer Batterie 50, die eine Fahrzeugbatterie mit einer Spannung von 12 Volt und einer Kapazität von 88 Ah sein kann. Der Elektrokreis 48 dieses Ausführungsbeispiels ist also ein Gleichstromkreis, und der Haupt-, der Neben- und der Sicherheitsschalter 26, 28 und 30 wie auch der Motor 18 weisen Anschlüsse für Plus und Minus auf. Der Haupt- und der Nebenschalter 26 und 28 sind identisch ausgebildet und weisen jeweils einen Plus- und einen Minuseingang 52 und 54 sowie einen Plus- und einen Minusausgang 56 und 58 auf, wobei sich die Plus- und die Minuseingänge 52 und 54 innerhalb des Haupt- bzw. des Nebenschalters 26 bzw. 28 in zwei Zweige 60 und 62 teilen. Die Zweige 60, 62 und die Plus- und Minusausgänge 56, 58 sind über von außen bewegliche und synchron verschwenkbare Kontakte 64, 66 verbindbar, so daß ein Stromdurchfluß oder eine Unterbrechung des Stromdurchflusses möglich ist.

Der Sicherheitsschalter 30 ist lediglich mit einem Minuseingang 68, einem Minusausgang 70 und einem Schwenkkontakt 72 versehen, wobei letzterer, wie bereits vorstehend beschrieben, durch den Hebelmechanismus 38 betätigt wird, um den Minuseingang 68 mit dem Minusausgang 70 zu verbinden oder nicht.

Der Motor 18 weist eine Plus- und eine Minusklemme 74 und 76 und die Batterie 50 einen Plus- und einen Minuspol 78 und 80 auf.

Zwischen dem Minuspol 80 und dem Minuseingang 54 des Hauptschalters 26 verläuft eine Leitung 82, zwischen dem Minusausgang 58 des Hauptschalters 26 und dem Minusausgang 58 des Nebenschalters 28 eine Leitung 84, zwischen dem Minuseingang 54 des Nebenschalters 28 und dem Minusausgang 70 des Sicherheitsschalters 30 eine Leitung 86, zwischen der Leitung 84 und der Minusklemme 76 des Motors 18 eine Leitung 88 und zwischen dem Minuseingang 68 des Sicherheitsschalters 30 und der Leitung 82 eine Leitung 90.

Desgleichen erstreckt sich für die Verbindung der Plusanschlüsse zwischen dem Pluspol 78 und dem Pluseingang 52 des Hauptschalters 26 eine Leitung 92, zwischen den Plusausgängen 56 des Haupt- und des Nebenschalters 26 und 28 eine Leitung 94, zwischen dem Pluseingang 52 des Nebenschalters 28 und der Leitung 92 eine Leitung 96 und zwischen der Leitung 94 und der Plusklemme 74 des Motors 18 eine Leitung 98.

Wird der Hauptschalter 26 in eine Stellung für Heben gedrückt, dann verbindet der Kontakt 66 den Minuseingang 54 mit dem Minusausgang 58, so daß über die Leitungen 82, 84 und 88 eine Verbindung zwischen dem Minuspol 80 und der Minusklemme 76 des Motors 18 stattfindet, während eine Anbindung des Pluspoles 78 an die Plusklemme 74 des Motors 18 über die Leitungen 92, 94 und 98 erfolgt.

Wird der Hauptschalter 26 in Richtung für Senken gedrückt, dann verbindet der Kontakt 66 den Minuseingang 54 mit dem Plusausgang 56 und der Kontakt 64 den Pluseingang 52 mit dem Minusausgang 58, so daß an dem Motor 18 eine Umpolung stattfindet und dessen Hebelarm 44 in der anderen Richtung verschwenkt wird.

Soll die Bedienung des Motors 18 von dem Nebenschalter 28 aus erfolgen, dann wird zum Heben der Plusausgang 56 mit dem Pluseingang 52 des Nebenschalters 28 über den Kontakt 64 verbunden, so daß ein Stromfluß von dem Pluspol 78 kommend durch die Leitungen 92, 96, 94 und 98 zu der Plusklemme 74 des Motors 18 erfolgt, während durch die Verbindung des Minuseingangs 54 mit dem Minusausgang 58 jeweils des Nebenschalters 28 mittels des Kontaktes 66 und der Verbindung des Minuseingangs 68 mit dem Minusausgang 70 des Sicherheitsschalters 30 mittels des Schwenkkontaktes 72 eine Verbindung des Minuspoles 80 mit der Minusklemme 76 des Motors 18 über die Leitungen 82, 90, 86, 84 und 88 entsteht.

Wird der Nebenschalter 28 in Richtung Senken gedrückt, dann erfolgt in der für den Hauptschalter 26 beschriebenen Weise ebenfalls eine Umpolung in dem Nebenschalter 28 und am Motor 18, so daß dessen Hebelarm 44 wiederum in der entgegengesetzten Richtung verschwenkt.

Man erkennt, daß eine Steuerung mittels des Nebenschalters 28 nur dann möglich ist, wenn der Sicherheitsschalter 30 einen Stromdurchlaß von dem Minuspol 80 zu dem Minuseingang 54 des Nebenschalters 28 ermöglicht.

Der Elektrokreis 48 kann in der Weise modifiziert werden, daß er dem Nebenschalter 28 oder den Nebenschaltern 28 ein nicht gezeigtes Zeitschaltrelais zuordnet, mit dessen Hilfe bewirkt wird, daß die unteren Lenker beim Betätigen eines Nebenschalters 28 nur für eine begrenzte Zeit, also auch nur über einen begrenzten Bereich, angehoben werden. Dieses Merkmal, das durch die Verwendung eines Zeitrelais mit Monoflop-Charakteristik erreicht wird, führt dazu, daß ein unbeabsichtigt langes Niederdrücken eines Nebenschalters 28 keine ungewollte und übermäßige Bewegung der unteren Lenker, die zu einem Unfall führen könnte, hervorruft. Ferner ist es möglich, das Zeitschaltrelais derart mit dem Nebenschalter 28 zu verbinden, daß die unteren Lenker nur schrittweise über von dem Zeitschaltrelais ausgesandte Impulse angehoben werden, solange der oder die Nebenschalter 28 niedergedrückt sind, während aber die Hubbewegung der unteren Lenker sofort unterbrochen wird, wenn der oder die Nebenschalter 28 losgelassen werden. Ein derartiges Zeitrelais ist mit einer astabilen Charakteristik versehen. Diese Charakteristik ist deshalb so bezeichnet, weil durch sie das Zeitrelais ständig zwischen einem Energie dem Motor 18 zuleitenden Zustand und einem einen Energiefluß zu dem Motor 18 sperrenden Zustand schwankt.

Im Gegensatz hierzu könnte ein Zeitrelais mit einer Monoflop-Charakteristik Verwendung finden, das dem Motor 18 jeweils nur Energie in vorbestimmter Zeitdauer zuführt. Sowohl das Zeitrelais mit der astabilen wie auch das Zeitrelais mit der Monoflop-Charakteristik können zusätzlich noch mit dem Hauptschalter 26 verbunden werden.

Die Verbindung des Hauptschalters 26 mit dem oder den Nebenschaltern 28 kann über Transistoren und/oder Dioden erfolgen, die derart zueinander geschaltet sind, daß eine Betätigung des Hauptschalters 26 Vorrang genießt vor einer Betätigung durch den Nebenschalter 28. Es können auch beim Vorhandensein mehrerer Nebenschalter 28 diese über ein Relais untereinander verbunden sein, um zu verhindern, daß es beim gleichzeitigen Betätigen mehrerer Nebenschalter 28 zu einem Kurzschluß kommt.

Zusätzlich hierzu kann eine ebenfalls nicht gezeigte Vorrichtung zum Verändern der Ausgangsdrehzahl des Motors 18 diesem vorgeschaltet werden, so daß zwischen einer hohen und einer niedrigen Ausgangsdrehzahl gewählt werden kann.

Die Intervallänge kann beim Zeitrelais mit astabiler Charakteristik nach der Trägheit des Krafthebers, nach seiner Regeldauer oder dergleichen festgelegt werden. Insgesamt wären ein Haupt- und ein Nebenschalter 26 und 28 vorstellbar, die jeweils fünf unterschiedliche Stellungen aufweisen könnten, nämlich eine Neutralstellung, eine Stellung für eine niedrige Ausgangsdrehzahl bei einem Zeitrelais mit Monoflop-Charakteristik und für Heben, eine Stellung für eine hohe Ausgangsdrehzahl bei einem Zeitrelais mit Monoflop-Charakteristik und für Heben, eine Stellung für eine niedrige Ausgangsdrehzahl bei einem Zeitrelais mit astabiler Charakteristik und für Senken und eine Stellung für eine hohe Ausgangsdrehzahl bei einem Zeitrelais mit astabiler Charakteristik und für Senken.

Aus Fig. 3 geht die Kulisse 12 mit mehreren Schlitzen 32 hervor. Aus einem von diesen erstreckt sich nach oben ein Bedienungshebel 100, der über die vorerwähnten Stellglieder 24 mit dem Hebel 16 verbunden und an seinem oberen Ende mit dem Hauptschalter 26 versehen ist, anstatt daß dieser, wie nach Fig. 1 vorgesehen, in die Kulisse 12 eingesetzt ist. Der Bedienungshebel 100 nimmt auch die Stelle der Anzeige 22 ein, da er durch seine Stellung in dem Schlitz 32 die jeweilige Stellung der unteren Lenker angibt. Der Hebel 16 bzw. die Stellglieder 24 sind über ein lösbares nicht gezeichnetes Verbindungsglied, etwa eine Lasche oder eine Klemme, wahlweise mit dem Motor 18 verbindbar, so daß der Bedienungshebel 100 zum Betätigen des Bedienungsgestänges 10 verwendet werden kann, wenn der Motor 18 oder der gesamte Elektrokreis 48 einen Defekt aufweisen sollten. Es muß dann aber stets eine Verbindung zwischen dem Bedienungshebel 100 und dem Hebel 16 derart erhalten bleiben, daß der Bedienungshebel 100 die Stellung der unteren Lenker in dem Schlitz 32 angeben kann. Wird der Hauptschalter 26 in dem Bedienungshebel 100 integriert, dann wäre es angebracht, den Bedienungshebel 100 nicht aus einem Voll-, sondern aus einem Hohlmaterial zu bilden, so daß die Verbindungen zu dem Hauptschalter 26 innerhalb des Bedienungshebels 100 bis zu dem Hauptschalter 26 geführt werden können. An der Funktion des Elektrokreises 48 ändert sich durch die Anbringung des Hauptschalters 26 auf dem Bedienungshebel 100 nichts.

**Patentansprüche**

1. Betätigungseinrichtung für einen Kraftheber mit mindestens einem Ventil, das über Stellglieder von einer mechanischen Hauptsteuereinheit aus, bzw. über einen Nebenschalter und einen Motor von einer elektrischen Nebensteuereinheit aus zum Einleiten einer Hub- oder Senkbewegung betätigt wird, dadurch gekennzeichnet, daß der Motor (18) ständig mit den Stellgliedern (24) verbunden ist und die Hauptsteuereinheit (11) mit einem ebenfalls auf den Motor (18) wirkenden Hauptschalter (26) versehen ist.

2. Betätigungseinrichtung nach Anspruch 1, dadurch gekennzeichnet, daß die Hauptsteuereinheit (11) anstatt mechanisch ebenfalls elektrisch wirkend ausgebildet ist.

3. Betätigungseinrichtung nach Anspruch 1, dadurch gekennzeichnet, daß ein Sicherheitsschalter (30) in der Nebensteuereinheit vorgesehen ist, der in Abhängigkeit von einer oder mehreren Betriebsfunktionen des Krafthebers eine Betätigung des Motors (18) unterbindet.

4. Betätigungseinrichtung nach Anspruch 1 oder 3 für einen Kraftheber eines Ackerschleppers mit einer Lage- und einer Zugkraftregelung, wobei eine Betätigung des Motors (18) unterbunden wird, wenn die Zugkraftregelung gewählt ist.

5. Betätigungseinrichtung nach jedem der voranstehenden Ansprüche für sich, wobei der Neben- und der Hauptschalter (26 und 28) direkt auf das Ventil wirken.

6. Betätigungseinrichtung nach Anspruch 4, dadurch gekennzeichnet, daß sich der Hauptschalter (26) auf einem Fahrerstand oder in einer Fahrerkabine des Ackerschleppers und der Nebenschalter (28) außerhalb des Fahrerstands oder außerhalb der Fahrerkabine befindet.

7. Betätigungseinrichtung nach einem oder mehreren der vorherigen Ansprüche, dadurch gekennzeichnet, daß die Stellglieder (24) die jeweilige Stellung des Krafthebers auf eine in einer Kulisse (12) zur Anzeige der Arbeitstiefe eines mit dem Kraftheber verbundenen Gerätes integrierte Anzeige (22) übertragen.

8. Betätigungseinrichtung nach einem oder mehreren der vorherigen Ansprüche, dadurch gekennzeichnet, daß der Haupt- und der Nebenschalter (26 und 28) mit Bezug auf den Motor (18) parallel geschaltet sind.

9. Betätigungseinrichtung nach einem oder mehreren der vorherigen Ansprüche, dadurch gekennzeichnet, daß der Sicherheitsschalter (30) und der Nebenschalter (28) mit Bezug auf den Motor (18) zueinander in Reihe geschaltet sind.

10. Betätigungseinrichtung nach Anspruch 6 und 7 mit einem von dem Fahrerstand aus erreichbaren und der Hauptsteuereinheit zugehörigen Bedienungshebel (100), dadurch gekennzeichnet, daß die Anzeige (22) als Zeiger ausgebildet ist, daß wahlweise der Bedienungshebel (100) oder die Anzeige (22) mit den Stellgliedern (24) verbindbar sind und daß die Stellglieder (24) in einen mit dem Motor (18) verbundenen und in einen von diesem getrennten Zustand bringbar sind.

11. Betätigungseinrichtung nach einem oder mehreren der vorherigen Ansprüche, dadurch gekennzeichnet, daß der Haupt- und der Nebenschalter (26 und 28) Dreistellungsschalter sind, die im nicht beaufschlagten Zustand in eine Unterbrechungsstellung zurückkehren.

12. Betätigungseinrichtung nach einem oder mehreren der vorherigen Ansprüche, dadurch gekennzeichnet, daß der Sicherheitsschalter (30) ein Zweistellungsschalter mit einer Durchgangs- und einer Unterbrechungsstellung ist.

13. Betätigungseinrichtung nach Anspruch 1, wobei die Stellglieder (24) über einen von einem Fahrerstand aus betätigbaren Bedienungshebel (100) verstellbar sind, dadurch gekennzeichnet, daß der Hauptschalter (26) auf dem Bedienungshebel (100) angeordnet und der Motor (18) mit den Stellgliedern (24) lösbar verbunden ist.

14. Betätigungseinrichtung nach einem oder mehreren der vorherigen Ansprüche, dadurch gekennzeichnet, daß der Nebenschalter (28) mit einem Zeitrelais verbunden ist, das dem Motor (18) nur kurzzeitig Energie zuspeist.

15. Betätigungseinrichtung nach Anspruch 14, dadurch gekennzeichnet, daß das Zeitrelais eine sogenannte Monoflop-Charakteristik aufweist.

16. Betätigungseinrichtung nach Anspruch 14, dadurch gekennzeichnet, daß das Zeitrelais eine astabile Charakteristik aufweist.

17. Betätigungseinrichtung nach einem oder mehreren der vorherigen Ansprüche, dadurch gekennzeichnet, daß mehrere Nebenschalter (28) zur Vermeidung des gleichzeitigen Schaltens von mehreren Stellen aus über ein Relais untereinander verbunden sind.

18. Betätigungseinrichtung nach einem oder mehreren der vorherigen Ansprüche, dadurch gekennzeichnet, daß der Hauptschalter (26) und der Nebenschalter (28) in einer Weise miteinander verbunden sind, die gewährleistet, daß bei betätigtem Hauptschalter (26) eine Betätigung mittels des Nebenschalters (28) wirkungslos bleibt.

19. Betätigungseinrichtung nach einem oder mehreren der vorherigen Ansprüche, dadurch gekennzeichnet, daß die Verstellgeschwindigkeit des Motors (18) wahlweise mittels des Haupt- und/oder des Nebenschalters (26 und/oder 28) steuerbar ist.

20. Betätigungseinrichtung nach einem oder mehreren der vorherigen Ansprüche, dadurch gekennzeichnet, daß der Hauptschalter (26) über ein Zeitrelais mit Monoflop oder astabiler Charakteristik auf den Motor (18) wirkt.

**Claims**

1. Operating device for a power lift with at least one valve which is operable for initiating a lifting or lowering movement through setting members of a mechanical main control unit or through an auxiliary switch and a motor of an electrical auxiliary control unit, characterized in that the motor (18) is permanently connected to the setting members (24) and the main control unit (11) is provided with a main switch (26) likewise acting on the motor (18).

2. Operating device according to claim 1, characterized in that the main control unit (11) is likewise formed electrically acting instead of mechanically.

3. Operating device according to claim 1, characterized in that a safety switch (30) is provided in the auxiliary control unit, which prevents operation of the motor (18) in dependence on one or more operating functions of the power lift.

4. Operating device according to claim 1 or 3 for a power lift of an agricultural tractor with a position and a draft force control, wherein an operation of the motor (18) is prevented when the draft force control is selected.

5. Operating device according to any of the preceding claims separately, wherein the auxiliary and the main switches (26 and 28) ace directly on the valve.

6. Operating device according to claim 4, characterized in that the main switch (26) is located on a driver station or in a driver cabin of the agricultural tractor and the auxiliary switch (28) is located outside the driver station or outside the driver cabin.

7. Operating device according to one or more of the preceding claims, characterized in that the setting members (24) transfer the current position of the power lift to an integrated indicator (22) in a coulisse (12) for indicating the working depth of an implement connected to the power lift.

8. Operating device according to one or more of the preceding claims, characterized in that the main and the auxiliary switches (26 and 28) are connected in parallel with reference to the motor (18).

9. Operating device according to one or more of the preceding claims, characterized in that the safety switch (30) and the auxiliary switch (26) are connected in series with each other with reference to the motor (18).

10. Operating device according to claim 6 and 7 with an operating lever (100) accessible from the driver position and pertaining to the main control unit, characterized in that the indicator (22) is formed as a pointer, in that the operating lever (100) or the indicator (22) are selectively connectable to the setting members (24) and in that the setting members (24) can be placed in a state connected to the motor (18) and a state disconnected therefrom.

11. Operating device according to one or more of the preceding claims, characterized in that the main and the auxiliary switches (26 and 28) are three-position switches, which return to an interrupting position in the unactuated state.

12. Operating device according to one or more of the preceding claims, characterized in that the safety switch (30) is a two-position switch with a conducting and an interrupting position.

13. Operating device according to claim 1, wherein the setting members (24) are adjustable by means of an operating lever (100) operable from a driver position, characterized in that the main switch (26) is arranged on the operating lever (100) and the motor is releasably connected to the setting members (24).

14. Operating device according to one or more of the preceding claims, characterized in that the auxiliary switch (28) is connected to a timer relay, which only supplies the motor with energy for a short time.

15. Operating device according to claim 14, characterized in that the timer relay has a so-called one-shot characteristic.

16. Operating device according to claim 14, characterized in that the timer relay has an astable characteristic.

17. Operating device according to one or more of the preceding claims, characterized in that a plurality of auxiliary switches (28) are connected together through a relay to avoid simultaneous switching of a plurality of positions.

18. Operating device according to one or more of the preceding claims, characterized in that the main switch (26) and the auxiliary switch (28) are so connected together as to ensure that, when the main switch (26) is actuated, actuation of the auxiliary switch (29) has no effect.

19. Operating device according to one or more of the preceding claims, characterized in that the speed of adjustment of the motor (18) is selectively controllable by means of the main and/or auxiliary switch (26 and/or 28).

20. Operating device according to one or more of the preceding claims, characterized in that the main switch (26) acts on the motor (18) through a timer relay with one-shot or astable characteristics.

**Revendications**

1. Dispositif de commande pour un appareil de levage à moteur comportant au moins une valve qui est actionnée par l'intermédiaire d'organes de réglage à partir d'une unité de commande principale mécanique et/ou par l'intermédiaire d'un interrupteur secondaire et d'un moteur, à partir d'une unité de commande secondaire électrique, pour déclencher un mouvement d'élévation ou d'abaissement, caractérisé en ce que le moteur (18) est relié en permanence aux organes de réglage (24) et l'unité de commande principale (11) comporte un interrupteur principal (26) agissant également sur le moteur (18).

2. Dispositif de commande suivant la revendication 1, caractérisé en ce que l'unité de commande principale (11) est réalisée de façon à fonctionner non pas mécaniquement mais, le cas échéant, électriquement.

3. Dispositif de commande suivant la revendication 1, caractérisé en ce qu'un interrupteur de sûreté (30) est prévu dans l'unité de commande secondaire, lequel empêche un actionnement du moteur (18) en fonction d'une ou plusieurs fonctions opératoires de l'appareil de levage à moteur.

4. Dispositif de commande suivant la revendications 1 ou 3, pour un appareil de levage à moteur d'un tracteur agricole comportant une régulation de position et une régulation de force de traction, un actionnement du moteur (18) étant empêché lorsque la régulation de force de traction est sélectionnée.

5. Dispositif de commande suivant chacune des revendications précédentes, en soi, l'interrupteur auxiliaire et l'interrupteur principal (26 et 28) agissant directement sur la valve.

6. Dispositif de commande suivant la revendication 4, caractérisé en ce que l'interrupteur principal (26) se trouve sur un poste de conduite ou dans une cabine de conduite du tracteur agricole, et l'interrupteur secondaire (28) à l'extérieur du poste de conduite ou de la cabine de conduite.

7. Dispositif de commande suivant une ou plusieurs des revendications précédentes, caractérisé en ce que les organes de réglage (24) transmettent chaque position respective de l'appareil de levage à moteur à un indicateur (22) intégré dans une coulisse (12) pour indiquer la profondeur de travail d'un appareil relié à l'appareil de levage.

8. Dispositif de commande suivant une ou plusieurs des revendications précédentes, caractérisé en ce que l'interrupteur principal et l'interrupteur secondaire (26 et 28) sont montés en parallèle par rapport au moteur (18).

9. Dispositif de commande suivant une ou plusieurs des revendications précédentes, caractérisé en ce que l'interrupteur de sûreté (30) et l'interrupteur secondaire (28) sont montés en série l'un avec l'autre par rapport au moteur (18).

10. Dispositif de commande suivant les revendications 6 et 7, comportant un levier de manœuvre (100) accessible à partir du poste de conduite et appartenant à l'unité de commande principale, caractérisé en ce que l'indicateur (22) se présente sous forme d'une aiguille, en ce qu'on peut relier à volonté le levier de manœuvre (100) ou l'indicateur (22) aux organes de réglage (24), et en ce que les organes de réglage (24) peuvent être mis en état de liaison avec le moteur (18) et dans un état de séparation de celui-ci.

11. Dispositif de commande suivant une ou plusieurs des revendications précédentes, caractérisé en ce que l'interrupteur principal et l'interrupteur secondaire (26 et 28) sont des interrupteurs à trois positions qui reviennent dans une position d'interruption lorsqu'ils ne sont pas sollicités.

12. Dispositif de commande suivant une ou plusieurs des revendications précédentes, caractérisé en ce que l'interrupteur de sûreté (30) est un interrupteur à deux positions avec une position de passage et une position d'interruption.

13. Dispositif de commande suivant la revendication 1, les organes de réglage (24) pouvant être déplacés au moyen d'un levier de manœuvre (100) manœuvrable à partir d'un poste de conduite, caractérisé en ce que l'interrupteur principal (26) est placé sur le levier de manœuvre (100) et le moteur (18) est relié de façon amovible aux organes de réglage (24).

14. Dispositif de commande suivante une ou plusieurs des revendications précédentes, caractérisé en ce que l'interrupteur secondaire (28) est relié à un relais temporisé qui alimente le moteur (18) en énergie seulement pendant une brève durée.

15. Dispositif de commande suivant la revendication 14, caractérisé en ce que le relais temporisé présente une caractéristique dite monostable.

16. Dispositif de commande suivant la revendication 14, caractérisé en ce que le relais temporisé présente une caractéristique astable.

17. Dispositif de commande suivant une ou plusieurs des revendications précédentes, caractérisé en ce que plusieurs interrupteurs secondaires (28) sont reliés entre eux par l'intermédiaire d'un relais pour éviter la commutation simultanée à partir de plusieurs positions.

18. Dispositif de commande suivant une ou plusieurs des revendications précédentes, caractérisé en ce que l'interrupteur principal (26) et l'interrupteur secondaire (28) sont reliés entre eux d'une façon qui garantit que, lorsque l'interrupteur principal (26) est actionné, un actionnement au moyen de l'interrupteur secondaire (28) reste sans effet.

19. Dispositif de commande suivant une ou plusieurs des revendications précédentes, caractérisé en ce que la vitesse de déplacement du moteur (18) peut être réglée à volonté au moyen de l'interrupteur principal et/ou de l'interrupteur secondaire (26 et/ou 28).

20. Dispositif de commande suivant une ou plusieurs des revendications précédentes, caractérisé en ce que l'interrupteur principal (26) agit sur le moteur (18) par l'intermédiaire d'un relais temporisé à caractéristique monostable ou astable.

EP 0 216 321 B1

FIG.3

FIG.1

FIG. 2